# EUROPÄISCHE PATENTANMELDUNG

(11) **EP 4 357 188 A1**
(43) Veröffentlichungstag der Anmeldung: **24.04.2024**
(21) Anmeldenummer: 23199961.6
(22) Anmeldetag: 27.09.2023
(51) Int. Cl.: B60L 15/20, B60W 30/20

(54) **VERFAHREN ZUM BETRIEB EINES FAHRZEUGANTRIEBSSTRANGS MIT EINEM ELEKTROMOTORISCHEN ANTRIEB UND FAHRZEUGANTRIEBSSTRANG**

(30) Priorität: 21.10.2022 DE 102022211166
(71) Anmelder: Robert Bosch GmbH, 70442 Stuttgart (DE)
(72) Erfinder: Fassnacht, Jochen, 75365 Calw (DE); Manderla, Maximilian, 61440 Oberursel (DE); Reimann, Sven, 71272 Renningen (DE)

(57) **Zusammenfassung**

Für ein Verfahren zum Betrieb eines Fahrzeugantriebsstrangs mit einem elektromotorischen Antrieb (4), wobei eine Drehzahl und ein Antriebsmoment des elektromotorischen Antriebs (4) über eine verzahnte Getriebestufe (12) für einen Abtrieb (19) wandelbar sind und der elektromotorische Antrieb (4) mit einem Ansteuerungssignal (40) angesteuert wird, wobei dem Ansteuersignal (40) zur Dämpfung von Getriebegeräusche verursachenden Schwingungen der verzahnten Getriebestufe (12) ein periodisches Drehmomentänderungssignal (5) überlagert wird, welches das Antriebsmoment wechselweise verringert und verstärkt, wird vorgeschlagen, dass die Schwingungen der verzahnten Getriebestufe (12) oder die daraus resultierenden Getriebegeräusche im Fahrzeug (2) mit einer Erfassungsvorrichtung (9) erfasst und die Amplitude und/oder die Phasenlage des periodischen Drehmomentänderungssignals (5) abhängig von den mit der Erfassungsvorrichtung (9) erfassten Schwingungen oder Getriebegeräuschen mittels einer selbstadaptierenden Regelung und/oder Ansteuerung angepasst wird, um die Schwingungen der verzahnten Getriebestufe (12) oder die daraus resultierenden Getriebegeräusche zu reduzieren.

## Beschreibung

### Stand der Technik

Bei elektrisch angetriebenen Fahrzeugen wird anstelle eines Verbrennungsmotors ein deutlich leiserer elektromotorischer Antrieb eingesetzt. Dies kann dazu führen, dass Geräusche als störend wahrgenommen werden, welche den Fahrzeuginsassen bisher nicht aufgefallen sind, da der Verbrennungsmotor oder seine Nebenaggregate sie übertönt haben. Dies gilt besonders bei geringen Fahrgeschwindigkeiten des Fahrzeugs, da Reifenabrollgeräusche und Windgeräusche bei hohen Geschwindigkeiten dominieren und eventuelle Zusatzgeräusche überdecken. Ein oftmals besonders störendes Geräusch ergibt sich aufgrund der variablen Zahnsteifigkeit beim Abrollen von zwei Getriebezahnrädern einer verzahnten Getriebestufe. Das Geräusch ist oft tonal und nimmt in der Regel mit ansteigendem Übertragungsmoment zu.

Die Zahnsteifigkeit einer verzahnten Getriebestufe ist variabel und ändert sich periodisch mit jedem einzelnen in Eingriff stehenden Zahnpaar der Getriebestufe. Die Frequenz der Änderung der Zahnsteifigkeit kann bei einfachen Stirnradstufen aus der Drehzahl des Zahnrades multipliziert mit seiner Zähnezahl erhalten werden. Ein Zahnradpaar kann in diesem Zusammenhang als ein mit variabler drehwinkelabhängiger Frequenz schwingender Zweimassenschwinger verstanden werden, bei dem ein erstes Zahnrad von einer elektrischen Maschine angetrieben wird und bei dem ein mit dem ersten Zahnrad kämmendes zweites Zahnrad den Abtrieb darstellt.

Durch die variable Zahnsteifigkeit einer Getriebestufe werden an den sich kämmenden Zahnrädern Schwingungen beim Rotieren angeregt, welche über die beteiligten Zahnräder, Achsen und Lager auf ein Gehäuse des Antriebs übertragen und dort beispielsweise von einer vibrierenden Oberfläche als Geräusch abgestrahlt werden. Bei der daraus resultierenden Geräuschemission kann auch die Karosserie des Fahrzeugs eingebunden sein. Besonders störend sind die Geräusche, welche am Ort der Fahrzeuginsassen ankommen. Diese störenden Geräusche lassen leider sich nicht vollständig durch konstruktive Maßnahmen, wie beispielsweise dämpfende Gummipuffer zwischen Getriebe und Karosserie oder eine Überdeckung der Zahnräder oder verstärkte Getriebegehäuse unterdrücken.

Aus der DE 10 2020 206 669 A1 ist ein Verfahren zum Betrieb eines Fahrzeugantriebsstrangs mit einem elektromotorischen Antrieb bekannt, bei dem eine Drehzahl und ein Antriebsmoment eines elektromotorischen Antriebs über eine verzahnte Getriebestufe für einen Abtrieb wandelbar sind und bei dem der elektromotorische Antrieb mit einem Ansteuerungssignal angesteuert wird, dem zur Dämpfung von Getriebegeräuschen ein sinusförmiges Drehmomentänderungssignal überlagert wird, welches das Antriebsmoment wechselweise verringert und verstärkt, wobei das periodische Drehmomentänderungssignal in Phase mit einer periodischen Zahnsteifigkeitsänderung der verzahnten Getriebestufe ist. Dies geschieht durch Aufprägen einer Stromharmonischen mit der Zahneingriffsfrequenz. Um die Getriebegeräusche wirksam zu dämpfen, wird die Amplitude und die Phasenlage der aufgeprägten Drehmomentschwingung dem aktuellen Arbeitspunkt entsprechend angepasst, wobei das periodische Drehmomentänderungssignal die Zahnsteifigkeit nachbildet und in einer Tabelle abgelegt ist oder durch eine mathematische Funktion beschrieben ist.

### Offenbarung der Erfindung

Die vorliegende Erfindung betrifft ein Verfahren zum Betrieb eines Fahrzeugantriebsstrangs mit einem elektromotorischen Antrieb, wobei eine Drehzahl und ein Antriebsmoment des elektromotorischen Antriebs über eine verzahnte Getriebestufe für einen Abtrieb wandelbar sind und der elektromotorische Antrieb mit einem Ansteuerungssignal angesteuert wird, wobei dem Ansteuersignal zur Dämpfung von Getriebegeräusche verursachenden Schwingungen der verzahnten Getriebestufe ein periodisches Drehmomentänderungssignal überlagert wird, welches das Antriebsmoment wechselweise verringert und verstärkt. Erfindungsgemäß werden die Schwingungen der verzahnten Getriebestufe oder die daraus resultierenden Getriebegeräusche im Fahrzeug mit einer Erfassungsvorrichtung erfasst und die Amplitude und/oder die Phasenlage des periodischen Drehmomentänderungssignals abhängig von den mit der Erfassungsvorrichtung erfassten Schwingungen oder Getriebegeräuschen mittels einer selbstadaptierenden Regelung und/oder Ansteuerung angepasst wird, um die Schwingungen der verzahnten Getriebestufe oder die daraus resultierenden Getriebegeräusche zu reduzieren.

Ferner betrifft die vorliegende Anmeldung einen Fahrzeugantriebsstrang mit einem elektromotorischen Antrieb, dessen Antriebsmoment und dessen Drehzahl veränderlich sind, mit einer verzahnten Getriebestufe, die zur Wandlung der Drehzahl und des Antriebsmoments an den Antrieb koppelbar ist, und mit einem Steuergerät zur Ansteuerung des Antriebs mit einem Ansteuerungssignal, wobei mittels des Steuergeräts dem Ansteuerungssignal ein periodisches Drehmomentänderungssignal überlagerbar ist, welches das Antriebsmoment wechselweise verringert und verstärkt. Erfindungsgemäß ist eine Erfassungsvorrichtung vorgesehen, welche die Schwingungen der verzahnten Getriebestufe oder die daraus resultierenden Getriebegeräusche im Fahrzeug erfasst, wobei das Steuergerät die Amplitude und/oder die Phasenlage des periodischen Drehmomentänderungssignals abhängig von den mit der Erfassungsvorrichtung erfassten Schwingungen oder Getriebegeräuschen mittels einer selbstadaptierenden Regelung und/oder Ansteuerung anpasst, um die Schwingungen der verzahnten Getriebestufe oder die daraus resultierenden Getriebegeräusche zu reduzieren.

### Vorteile der Erfindung

Vorteilhaft ermöglicht das erfindungsgemäße Verfahren, beispielsweise auch die Temperatur des Getriebeöls oder die Toleranzabweichungen des individuellen Antriebsstranges (sogenannte Exemplarstreuungen) der Achse oder die Einflüsse einer Ankopplung der Achse für die richtige Wahl von Amplitude und Phase des periodischen Drehmomentänderungssignals zu berücksichtigen. Dies geschieht, indem eine neuartige, adaptive beziehungsweise selbstlernende Regelung und/oder Ansteuerung zur Erzeugung oder Anpassung eines periodischen additiven Drehmomentschwingung in Kombination mit einer Erfassungsvorrichtung zur Erfassung der Schwingungen der verzahnten Getriebestufe oder der daraus resultierenden Getriebegeräusche verwandt wird.

Durch das selbstlernende Verfahren wird der periodische Drehmomentregeleingriff des elektromotorischen Antriebs im Betrieb so optimiert, dass die Geräusche der verzahnten Getriebestufe vorteilhaft mit der Zahneingriffsfrequenz insbesondere bei kleinen und mittleren Drehzahlen sehr gering werden, wodurch der Fahrkomfort erhöht wird. Hierfür wird für jeden Arbeitspunkt eine additive Drehmomentschwingung mit der richtigen Phasenlage und Amplitude eingestellt, welche dem elektromotorischen Antrieb eingeprägt wird, das heißt die Amplitude und/oder die Phasenlage des periodischen Drehmomentänderungssignals werden in Abhängigkeit von der Geräuschentwicklung so eingestellt, dass die Geräusche reduziert werden. Die einzuprägende Amplitude und Phasenlage können mit der Temperatur am Zahneingriff (bestehend aus Öltemperatur und Zahntemperatur) varrieren. Außerdem lassen sich auch solche Einflüsse berücksichtigen, welche Exemplarstreuungen sowie der Füllstand des Getriebeöles oder dessen Alterung auf die Geräuschentwicklung haben.

Die in der DE 10 2020 206 669 A1 beschriebene Applikation der Amplitude und Phasenlage für die verschiedenen Arbeitspunkte kann aufwändig werden, da viele Einzelpunkte angefahren und die entsprechenden Werte erfasst werden müssen. Mit der vorliegenden Erfindung ist jedoch das Einlernen der Dämpfungswerte (Amplitude, Phase der Dämpfungsschwingung mit der Zahneingriffsfrequenz) ohne große vorherige Applikation möglich, wodurch sich der Einfluss der Exemplarstreuungen und der gesamte Ausbreitungsweg des Schalls bis in die Fahrzeugkabine berücksichtigen lassen.

Vorteilhafte Ausführungsformen und Weiterbildungen der Erfindung ermöglichen die in den abhängigen Ansprüchen angegebenen Merkmale.

Als Erfassungsvorrichtung kann beispielsweise wenigstens ein Mikrophon zur Erfassung der Getriebegeräusche oder ein Beschleunigungssensor zur Erfassung der Schwingungen der verzahnten Getriebestufe verwandt werden. Das Mikrophon kann an verschiedenen Orten im Fahrzeug angeordnet werden.

Besonders bevorzugt ist jedoch ein Mikrophon zur Erfassung der Getriebegeräusche, welches im Fahrgastraum des Fahrzeuges angeordnet ist und die Getriebegeräusche daher auch im Fahrgastraum erfasst. Mit dem Mikrophon können die Geräusche, welches die Schwingung mit der Zahneingriffsfrequenz im Fahrzeuginnenraum verursacht, erfasst werden. Bei Fahrzeugen mit einer Freisprecheinrichtung ist oftmals ein Mikrophon in der Fahrzeugkabine verbaut, welches hierfür verwendet werden kann. Somit ist kein zusätzlicher Sensor nötig, sondern nur eine zusätzliche Software auf einem Steuergerät des Fahrzeuges, welches an die Freisprecheinrichtung beziehungsweise an das Mikrophon angebunden ist. Dadurch wird vorteilhaft die gesamte Strecke zwischen der Geräuschentstehung am Zahneingriff und den Ohren der Fahrzeuginsassen berücksichtigt. Für den Fahrkomfort relevant ist das Geräusch, das in der Kabine bei den Insassen ankommt. Daher ist es vorteilhaft, dass mit dem Verfahren der gesamte Übertragungsweg des Schalls inklusive der Karosserie berücksichtig werden kann und die Geräuschdämpfung entsprechend angepasst wird. Alternativ oder zusätzlich kann aber auch ein Mikrophon oder ein Beschleunigungssensor beziehungsweise Schwingungssensor an geeigneter Stelle im Fahrzeug verbaut und entsprechend ausgewertet werden

Vorteilhaft kann das Ausgangssignal der Erfassungsvorrichtung einer ersten Berechnungseinheit zugeführt werden, welche eine Fast-Fourier-Transformation durchführt, um aus dem Ausgangssignal der Erfassungsvorrichtung ein Schwingungssignal der verzahnten Getriebestufe zu separieren. In Abhängigkeit von dem separierten Schwingungssignal der verzahnten Getriebestufe kann dann beispielsweise die Amplitude und/oder die Phasenlage des periodischen Drehmomentänderungssignals in einer zweiten Berechnungseinheit laufend adaptiert werden.

Besonders bevorzugt wird dabei die Amplitude und/oder die Phasenlage des periodischen Drehmomentänderungssignals durch einen Trial-and-Error-Algorithmus adaptiert, der selbstlernend die Amplitude und/oder Phasenlage des periodischen Drehmomentänderungssignals iterativ ändert, um die Schwingungen der verzahnten Getriebestufe oder die daraus resultierenden Getriebegeräusche zu reduzieren. Die Anpassung der Amplitude und Phasenlage kann auch mittels eines Verfahrens oder Algorithmus der künstlichen Intelligenz vorgenommen werden.

### Kurze Beschreibung der Zeichnungen

Nachfolgend werden mögliche Ausführungsformen der Erfindung unter Bezugnahme auf die beiliegende Zeichnung erläutert. In der Zeichnung zeigen:
- Fig. 1: eine schematische Darstellung eines Fahrzeugs mit einem Antriebsstrang und einer Erfassungsvorrichtung zur Erfassung von Getriebegeräuschen,
- Fig. 2: ein Blockschaltbild einer Geräuschdämpfung mittels einer selbstadaptierenden Regelung und/oder Ansteuerung,
- Fig. 3: im oberen Teil einen beispielhaften Verlauf (a) der Temperatur am Stator eines elektromotorischen Antriebes über der Zeit, im mittleren Teil einen beispielhaften Verlauf (b) der Getriebeöltemperatur und den Verlauf (c) der Getriebetemperatur des Getriebes eines Antriebsstrangs über der Zeit, im unteren Teil ein erfasstes Geräuschsignal (d) eines Antriebsstranges über der Zeit,
- Fig. 4: für ein und den gleichen Antriebsstrang: oben links den zeitlichen Verlauf (b) der Getriebeöltemperatur und den Verlauf (c) der Getriebetemperatur des Getriebes über der Zeit, unten links das erfasste Geräuschsignal (d) über der Zeit, oben rechts den Verlauf (e) der normierten Amplitude a/A des periodischen Drehmomentänderungssignals über der Zeit und unten rechts den Verlauf (f) der Phasenlage p in Bogenmaß (rad) des periodischen Drehmomentänderungssignals über der Zeit, wobei in allen Diagrammen die gleichen Zeitpunkte dargestellt sind.

### Ausführungsformen der Erfindung

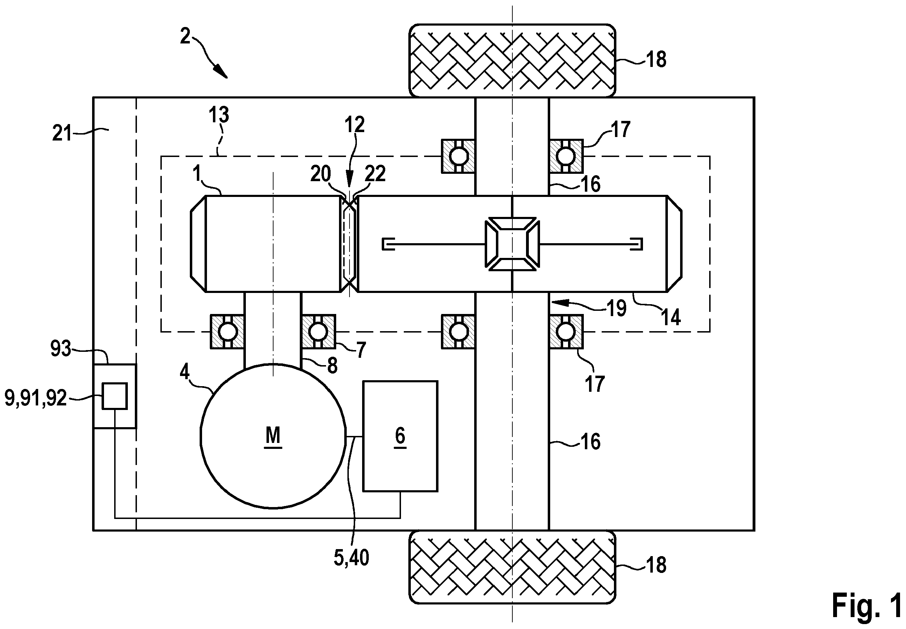

Fig. 1 zeigt schematisch ein Fahrzeug 2 mit einem Antriebsstrang. Das Fahrzeug 2 weist einen elektromotorischen Antrieb 4 auf. Der elektromotorische Antrieb 4 kann beispielsweise als Synchronmotor, insbesondere als permanenterregter Synchronmotor, als umrichtergeführter Asynchronmotor, Gleichstrommotor, Reluktanzmaschine oder Transversalflussmotor oder andere elektrische Maschine ausgeführt sein. Das Antriebsmoment und die Drehzahl des Antriebs 4 sind mittels eines Steuergeräts 6 veränderlich, das insoweit zur Ansteuerung des elektromotorischen Antriebs 4 vorgesehen ist.

Eine mittels eines Wälzlagers 7 drehbar gelagerte Ausgangswelle 8 des elektromotorischen Antriebs 4 ist beispielsweise mit einem ersten Zahnrad 1 einer verzahnten Getriebestufe 12 drehfest verbunden, die innerhalb eines Getriebegehäuses 13 angeordnet ist. Das erste Zahnrad 1 kämmt mit einem zweiten Zahnrad 14 der Getriebestufe 12. Das zweite Zahnrad 14 kann mit zwei Antriebswellen 16 gekoppelt sein, die in Wälzlagern 17 gelagert und drehfest mit Fahrzeugrädern 18 verbunden sind.

Das erste Zahnrad 1 ist hier beispielsweise im Durchmesser kleiner als das zweite Zahnrad 14 und bildet insoweit ein Zahnritzel. Eine Drehzahl und ein Antriebsmoment des Antriebs 4 werden über die verzahnte Getriebestufe 12 für einen die Antriebswellen 16 umfassenden Abtrieb 19 gewandelt. Mittels der Getriebestufe 12 kann die Drehzahl des Antriebs 4 beispielsweise in eine geringere Getriebe-Ausgangsdrehzahl übersetzt und das Antriebsmoment in ein höheres Getriebe-Ausgangsmoment übersetzt werden. Das zweite Zahnrad 14 kann ein Differentialgetriebe beinhalten, welche das Getriebe-Ausgangsmoment gleichmäßig auf die beiden Fahrzeugräder 18 verteilt. Alternativ kann die Getriebestufe 12 aber auch als Planetengetriebe und/oder als schaltbares Getriebe mit mehreren Stufen, insbesondere zwei Stufen, ausgeführt sein, die voneinander unterschiedliche Übersetzungen aufweisen.

Die Zahnräder 1, 14 können geradeverzahnt oder schrägverzahnt sein. Die Zähne 20, 22 der Zahnräder 1, 14 kämmen miteinander. Das System aus den beiden ineinander eingreifenden Zahnrädern 1, 14 mit einer variablen Zahnsteifigkeit stellt einen Zweimassenschwinger mit variabler Federkonstante dar. Dabei weist das erste Zahnrad 1 eine erste Massenträgheit auf und das zweite Zahnrad 14 weist eine zweite Massenträgheit auf. Daher bilden die beiden Zahnräder 1, 14 einen Zweimassenschwinger, der mit einer variablen, von der Drehstellung abhängigen Frequenz, einer sogenannten Zahneingriffsfrequenz, schwingt. Durch die variable Zahnsteifigkeit der Zähne werden an den sich kämmenden Zahnrädern 1, 14 Schwingungen beim Rotieren angeregt, welche über die Zahnräder 1, 14 die Wellen 8, 16 und die Wälzlager 7, 17 auf das Getriebegehäuse 13 übertragen und dort von einer vibrierenden Oberfläche als Geräusch abgestrahlt werden. Neben den rotativen Schwingungen schwingen die Zahnräder 1, 14 auch translatorisch mit den Lagern 7, 17 gegen das Getriebegehäuse 13, wodurch die Geräusche verursacht werden. Hierdurch wird das Getriebegehäuse 13 zu Schwingungen angeregt, sodass sich in der Luft Schallwellen in Form von Druck- und Dichteschwankungen fortpflanzen.

Eine Ansteuerung des elektromotorischen Antriebs 4, welche auf der Einprägung, das heißt einer Überlagerung einer periodischen additiven Drehmomentschwingung über den Antrieb 4 zur Dämpfung unerwünschter Geräusche mit der Zahneingriffsfrequenz beim Betrieb des Fahrzeugs 2 beruht, kann beispielsweise in dem Steuergerät 6 ausgeführt werden. Hierzu wird ein periodisches Drehmomentänderungssignal 5 einem Ansteuerungssignal 40 des Antriebs 4 überlagert. Das periodische Drehmomentänderungssignal 5 verringert und verstärkt wechselweise das Antriebsmoment. Insofern ist das periodische Drehmomentänderungssignal 5 mit der Zahnsteifigkeit der in den Kraftfluss geschalteten Getriebestufe 12 korreliert. Jedoch braucht das periodische Drehmomentänderungssignal 5 anders als in dem angegebenen Stand der Technik nicht in Phase mit der Zahnsteifigkeitsänderung zu sein. Das Ansteuerungssignal 40 kann insbesondere ein Drehmomentregelsignal oder auch ein Ausgangsspannungssignal einer Drehmomentregelung sein. Diese Drehmomentregelung kann insbesondere feldorientiert, d.h. eine Vektorregelung sein. Durch eine feldorientierte Regelung wird erreicht, dass mit einem im Steuergerät 6 vorgesehene Frequenzumrichter die Drehzahl- und Positioniergenauigkeit verbessert wird.

Dieses periodische Drehmomentänderungssignal 5 hat idealerweise keinen Gleichanteil oder einen Gleichanteil von null. Das Drehmomentänderungssignal 5 erhöht oder reduziert ein übertragenes Gesamtmoment, das sich aufgrund des Drehmomentregelsignals und des Antriebssteuerungssignals am Antrieb 4 einstellt. Dabei wird das Gesamtmoment gemäß dem hier vorgestellten Verfahren letztlich in Abhängigkeit von der Zahnsteifigkeit der augenblicklich im Zahneingriff befindlichen Zähne 20, 22, erhöht oder reduziert. Im Mittel wird das vom Fahrer angeforderte Ausgangsdrehmoment, welches von der parallel arbeitenden Drehmomentregelung eingestellt wird, nicht geändert.

Durch die Addition eines periodischen stationären Drehmomentsollwert- oder Spannungssollwertsignals auf ein Ausgangssignal des beispielsweise feldorientierten Drehmoment- oder Stromreglers kann ein Getriebegeräusch mit der Zahneingriffsfrequenz gedämpft werden. Zu diesem Zweck ist eine Erfassungsvorrichtung 9 vorgesehen, die beispielsweise als Mikrophon 91 oder Beschleunigungssensor 92 ausgebildet sein kann. Im vorliegenden Beispiel ist die Erfassungsvorrichtung als 9 als Mikrophon 91 ausgebildet. Das Mikrophon 91 ist vorzugsweise im Fahrgastraum 21 des Fahrzeugs 2 angeordnet. Es kann sich beispielsweise um das Mikrophon einer Freisprecheinrichtung 93 handeln. Durch die Auswertung des Signals des Mikrophons 91 kann die Geräuschdämpfung des Getriebes durch Addition eines periodischen stationären Drehmomentsollwert- oder Stromsollwertsignals bzw. Spannungssollwertsignals auf das Ausgangssignal des z.B. feldorientierten Drehmoment- oder Stromreglers optimiert werden.

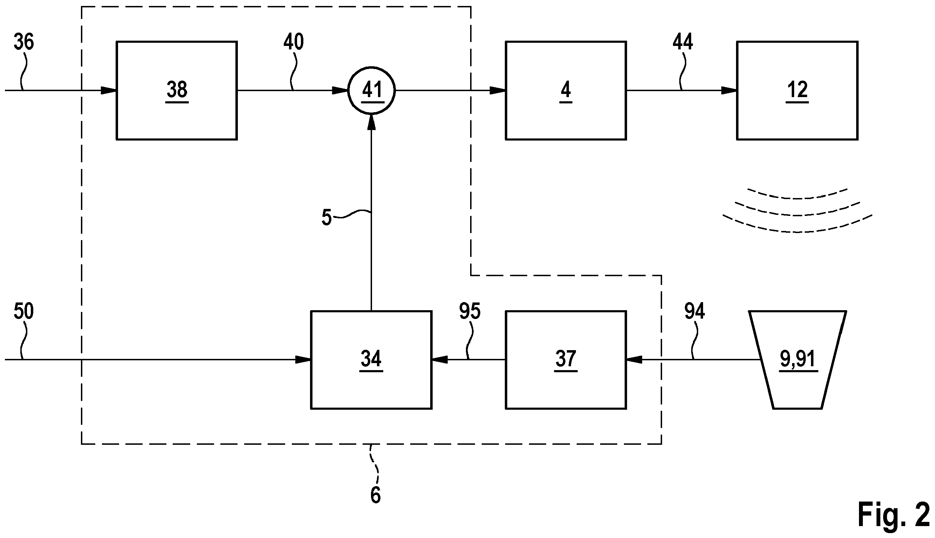

Ein Beispiel hierzu ist in Fig. 2 dargestellt. Mit dem Bezugszeichen 6 ist ein beispielsweise als Inverter ausgeführtes Steuergerät des elektromotorischen Antriebs 4 bezeichnet. Der Block 38 bezeichnet eine feldorientierte Drehmomentregelung 38, der als Eingangsgröße ein Drehmomentsollwert 36 zugeführt wird. Es sind aber auch andere Regelungen möglich. Als Ausgangsgröße wird von der feldorientierten Drehmomentregelung 38 ein Statorspannungssollwert 40 ausgegeben. Auf diesen Statorspannungssollwert 40 kann das Drehmomentänderungssignal 5 an einem Summationsknotenpunkt 41 aufaddiert werden. Das Ergebnis dieser Summation wird als Eingangswert dem elektromotorischen Antrieb 4 zugeführt. Der elektrische Antrieb 4 erzeugt in Abhängigkeit davon ein Antriebsdrehmoment 44, mit welchem er die Getriebestufe 12 in Fig. 1 beaufschlagt. Die Frequenz der Schwingungsanregung der ineinander eingreifenden Zahnräder der Getriebestufe 12 führt zu einer Geräuschemission, die mit dem Mikrophon 91 erfasst wird.

Mittels einer ersten Berechnungseinheit 37, die nicht notwendigerweise Teil des Steuergerätes 6 sein braucht, wird das Ausgangssignal 94 des Mikrophons 91 einer Fast-Fourier-Transformation unterzogen, um aus dem Ausgangssignal 94 ein Schwingungssignal 95 der verzahnten Getriebestufe 12 beziehungsweise den Frequenzanteil mit der Zahneingriffsfrequenz zu separieren. Das Schwingungssignal 95 ist eine Eingangsgröße in eine zweite Berechnungseinheit 34, die vorzugsweise aber nicht notwendig ein Teil des Steuergerätes 6 ist. Eine zweite Eingangsgröße der zweiten Berechnungseinheit 34 kann beispielsweise die Geschwindigkeit 50 des Fahrzeugs 2 oder die Drehzahl des elektromotorischen Antriebs 4 sein. Die zweite Berechnungseinheit 34, welche auch baulich mit der ersten Berechnungseinheit 37 zusammengefasst sein kann, bildet in Abhängigkeit von dem separierten Schwingungssignal 95 der verzahnten Getriebestufe 12 die Amplitude und/oder die Phasenlage des periodischen Drehmomentänderungssignals 5 mittels einer selbstadaptierenden Regelung und/oder Ansteuerung. In der zweiten Berechnungseinheit 34 kann die Amplitude und/oder die Phasenlage des Drehmomentänderungssignals 5 beispielsweise insbesondere durch einen Trial-and-Error-Algorithmus adaptiert werden, welcher selbstlernend die Amplitude und/oder Phasenlage des periodischen Drehmomentänderungssignals iterativ ändert, um die Schwingungen der verzahnten Getriebestufe oder die daraus resultierenden Getriebegeräusche zu reduzieren. Der Trial-and-Error-Algorithmus ändert (das heißt er erhöht oder verringert) die Phase bzw. die Amplitude des Dämpfungssignals und prüft, ob die Geräuschentwicklung geringer oder größer wurde. Wird das Geräusch geringer, so wird weiter in diese Richtung gegangen, ansonsten wird eine andere Richtung eingeschlagen. Es sind aber auch alternative andere Lern- und Anpassungsalgorithmen denkbar, wie beispielsweise Verfahren der künstlichen Intelligenz.

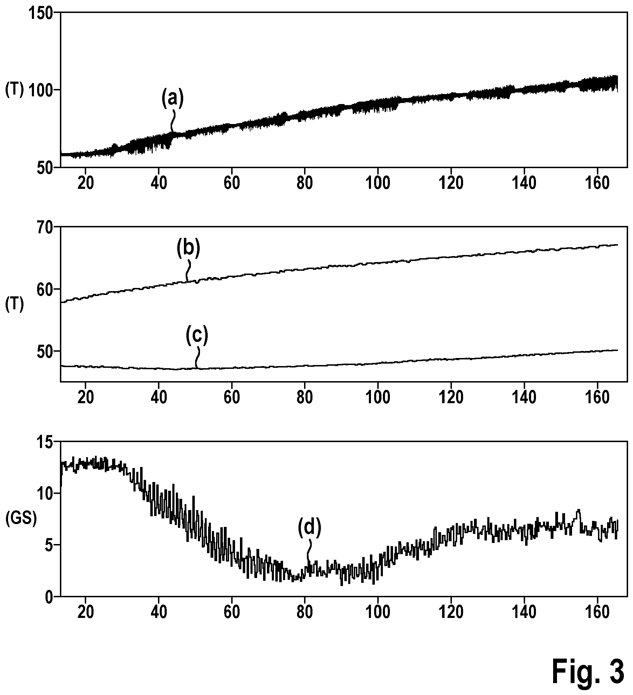

Fig. 3 zeigt im oberen Teil ein Diagramm, bei dem auf der Ordinate eine Temperaturwert und auf der Abszisse ein Zeitwert aufgetragen ist. Die dargestellten Verläufe (a) bis (d) wurden bei einer Radrehzahl der Achse von 177 U/min und einer großen konstanten Dauerlast aufgenommen. Im Einzelnen dargestellt ist ein beispielhafter Verlauf (a) der Temperatur T am Stator des elektromotorischen Antriebes 4. Im mittleren Teil ist ein beispielhafter Verlauf (b) der Getriebeöltemperatur und der korrespondierende Verlauf (c) der Getriebetemperatur des Getriebes über der Zeit dargestellt. Im unteren Teil der Fig. 3 ist ein erfasstes Geräuschsignal (d) eines Antriebsstranges über der Zeit aufgetragen. Auf der Ordinate ist die Amplitude des Geräuschsignals aufgetragen. Das Geräuschsignal (d) kann beispielsweise das durch eine Fast-Fourier-Transformation erhaltene Schwingungssignal 94 sein, wie anhand der Fig. 2 erläutert. Die Zeitwerte der Abszissen sind in allen drei Diagrammen der Fig. 3 die gleichen, so dass Fig. 3 eine Übersicht über den zeitlich parallelen Verlauf von Statortemperatur, Getriebeöltemperatur, Getriebetemperatur und Geräuschentwicklung darstellt.

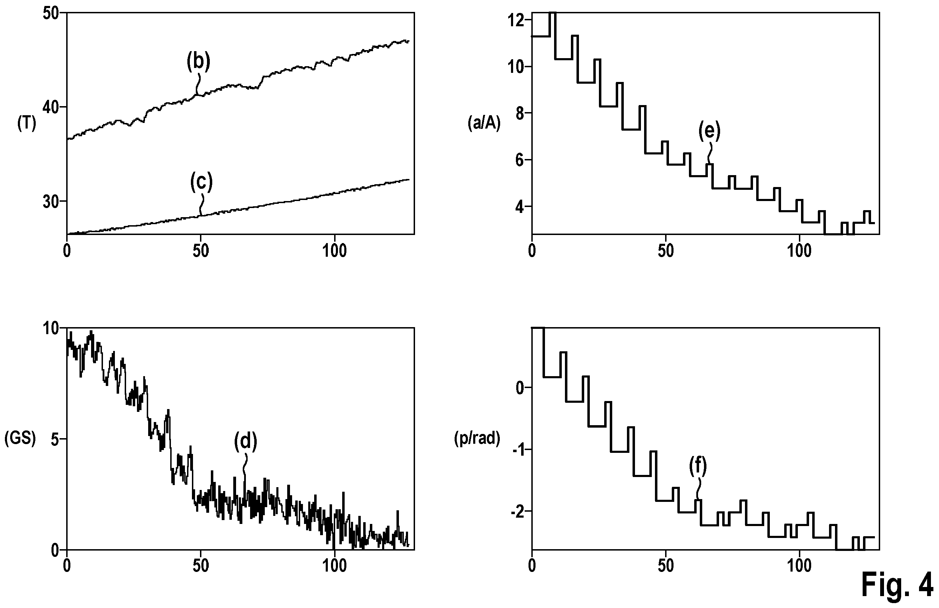

In Fig. 4 sind vier Diagramme dargestellt, bei denen jeweils auf der Abszisse die Zeit in Sekunden aufgetragen ist. Auch hier handelt es sich um die gleichen Zeitwerte. Die in den vier Diagrammen der Fig. 4 darstellten Verläufe beziehen sich auf den gleichen Antriebsstrang und die Zeitwerte sind synchron dargestellt, so dass sich die zeitliche Entwicklung der vier Verläufe direkt vergleichen lässt. Im Diagramm oben links ist der zeitliche Verlauf (b) der Getriebeöltemperatur und der Verlauf (c) der Getriebetemperatur des Getriebes über der Zeit dargestellt. Im Diagramm unten links ist das Geräuschsignal (d) über der Zeit dargestellt. In den Diagrammen oben rechts und unten rechts ist dagegen die Applikation von Amplitude und die Phasenlage des periodischen Drehmomentänderungssignals 5 dargestellt. Dabei ist der Verlauf (e) der normierten Amplitude a/A des periodischen Drehmomentänderungssignals über der Zeit und der Verlauf (f) der Phasenlage p in Bogenmaß (rad) des periodischen Drehmomentänderungssignals auf der gleichen Zeitachse dargestellt.

In dem hier dargestellten Beispiel wird am Nullpunkt der Zeitskala von einem anfänglich ungünstigen Wert des periodischen Drehmomentänderungssignals 5 (bei dem beispielsweise eine unkorrekte Phasenlage oder zu großer Amplitude aufprägt wird) ausgegangen, was der Fall sein kann, da das periodische Drehmomentänderungssignal noch nicht adaptiert wurde. In der folgenden Zeit verändert der Trial-and-Error-Algorithmus des Blocks 34 beziehungsweise der Geräuschdämpfung interativ die Amplitude (Verlauf (e)) und die Phasenlage (Verlauf (f)) des periodischen Drehmomentänderungssignals 5. Dabei wird in einzelnen Schritten beispielsweise jeweils die Amplitude und die Phasenlage vergrößert und anschließend verkleinert, wobei die Höhe der jeweiligen Änderung aus dem Verlauf der Geräuschentwicklung gefolgert wird, welche laufend beobachtet wird (Verlauf (d)). Man erkennt das im Zeitintervall der ersten Sekunden eine sehr rasche spürbare Reduktion der Geräuschentwicklung vorgenommen wird. Über den Zeitpunkt von 50 Sekunden hinaus findet eine weitere allmähliche Reduktion der Geräuschentwicklung statt, wobei sich die Geräuschdämpfung beispielsweise einregelt auf eine Amplitude a/A von etwa 3 und eine Phasenlage von p/rad von etwa -2,5, bei welcher der Geräuschpegel GS gegenüber dem Anfangswert deutlich reduziert ist. Aus dem Vergleich des Verlaufs des periodischen Drehmomentänderungssignale mit dem oben links darstellten Temperaturverlauf ist darüber hinaus auch erkennbar, dass der Algorithmus im Block 35 dem Verlauf der Temperatur folgt, um ein gutes Dämpfungssignal einzustellen.

## Patentansprüche

1. Verfahren zum Betrieb eines Fahrzeugantriebsstrangs mit einem elektromotorischen Antrieb (4), wobei eine Drehzahl und ein Antriebsmoment des elektromotorischen Antriebs (4) über eine verzahnte Getriebestufe (12) für einen Abtrieb (19) wandelbar sind und der elektromotorische Antrieb (4) mit einem Ansteuerungssignal (40) angesteuert wird, wobei dem Ansteuersignal (40) zur Dämpfung von Getriebegeräusche verursachenden Schwingungen der verzahnten Getriebestufe (12) ein periodisches Drehmomentänderungssignal (5) überlagert wird, welches das Antriebsmoment wechselweise verringert und verstärkt, **dadurch gekennzeichnet, dass** die Schwingungen der verzahnten Getriebestufe (12) oder die daraus resultierenden Getriebegeräusche im Fahrzeug (2) mit einer Erfassungsvorrichtung (9) erfasst und die Amplitude und/oder die Phasenlage des periodischen Drehmomentänderungssignals (5) abhängig von den mit der Erfassungsvorrichtung (9) erfassten Schwingungen oder Getriebegeräuschen mittels einer selbstadaptierenden Regelung und/oder Ansteuerung angepasst wird, um die Schwingungen der verzahnten Getriebestufe (12) oder die daraus resultierenden Getriebegeräusche zu reduzieren.

2. Verfahren nach Anspruch 1, **dadurch gekennzeichnet, dass** die Erfassungsvorrichtung (9) ein Mikrophon (91) zur Erfassung der Getriebegeräusche oder ein Beschleunigungssensor (92) zur Erfassung der Schwingungen der verzahnten Getriebestufe ist.

3. Verfahren nach Anspruch 2, **dadurch gekennzeichnet, dass** die Erfassungsvorrichtung (9) ein Mikrophon (91) zur Erfassung der Getriebegeräusche ist, welches im Fahrgastraum (21) des Fahrzeuges (2) angeordnet ist und die Getriebegeräusche im Fahrgastraum (21) erfasst.

4. Verfahren nach Anspruch 3, **dadurch gekennzeichnet, dass** das Mikrophon (91) ein im Fahrgastraum (21) angeordnetes Mikrophon einer Freisprecheinrichtung (93) ist.

5. Verfahren nach einem der Ansprüche 1 bis 4, **dadurch gekennzeichnet, dass** ein Ausgangssignal (94) der Erfassungsvorrichtung (9) einer ersten Berechnungseinheit (37) zugeführt wird, welche eine Fast-Fourier-Transformation durchführt, um aus dem Ausgangssignal (94) der Erfassungsvorrichtung (9) ein Schwingungssignal (95) der verzahnten Getriebestufe (12) zu separieren.

6. Verfahren nach Anspruch 5, **dadurch gekennzeichnet, dass** in Abhängigkeit von dem separierten Schwingungssignal (95) der verzahnten Getriebestufe (12) die Amplitude und/oder die Phasenlage des periodischen Drehmomentänderungssignals (5) in einer zweiten Berechnungseinheit (34) laufend adaptiert wird.

7. Verfahren nach Anspruch 6, **dadurch gekennzeichnet, dass** die Amplitude und/oder die Phasenlage des periodischen Drehmomentänderungssignals (5) durch einen Trial-and-Error-Algorithmus adaptiert wird, der selbstlernend die Amplitude und/oder Phasenlage des periodischen Drehmomentänderungssignals (5) iterativ ändert, um die Schwingungen der verzahnten Getriebestufe (12) oder die daraus resultierenden Getriebegeräusche zu reduzieren.

8. Fahrzeugantriebsstrang mit einem elektromotorischen Antrieb (4), dessen Antriebsmoment und dessen Drehzahl veränderlich sind, mit einer verzahnten Getriebestufe (12), die zur Wandlung der Drehzahl und des Antriebsmoments an den Antrieb (4) koppelbar ist, mit einem Steuergerät (6) zur Ansteuerung des Antriebs (4) mit einem Ansteuerungssignal (40), wobei mittels des Steuergeräts (6) dem Ansteuerungssignal (40) ein periodisches Drehmomentänderungssignal (5) überlagerbar ist, welches das Antriebsmoment wechselweise verringert und verstärkt, **dadurch gekennzeichnet, dass** eine Erfassungsvorrichtung (9) vorgesehen ist, welche die Schwingungen der verzahnten Getriebestufe (12) oder die daraus resultierenden Getriebegeräusche im Fahrzeug (2) erfasst, und dass das Steuergerät (6) die Amplitude und/oder die Phasenlage des periodischen Drehmomentänderungssignals (5) abhängig von den mit der Erfassungsvorrichtung (9) erfassten Schwingungen oder Getriebegeräuschen mittels einer selbstadaptierenden Regelung und/oder Ansteuerung anpasst, um die Schwingungen der verzahnten Getriebestufe (12) oder die daraus resultierenden Getriebegeräusche zu reduzieren.

9. Fahrzeugantriebsstrang nach Anspruch 8, **dadurch gekennzeichnet, dass** die Erfassungsvorrichtung (9) ein Mikrophon (91) zur Erfassung der Getriebegeräusche oder ein Beschleunigungssensor (92) zur Erfassung der Schwingungen der verzahnten Getriebestufe (12) ist.

10. Fahrzeugantriebsstrang nach Anspruch 9, **dadurch gekennzeichnet, dass** die Erfassungsvorrichtung ein Mikrophon (91) zur Erfassung der Getriebegeräusche ist, welches im Fahrgastraum (21) des Fahrzeuges (2) angeordnet ist und die Getriebegeräusche im Fahrgastraum (21) erfasst.

11. Computerprogramm, das eingerichtet ist, um für das Verfahrens gemäß einem der Ansprüche 1 bis 7 die Amplitude und/oder die Phasenlage des periodischen Drehmomentänderungssignals (5) abhängig von den erfassten Schwingungen oder Getriebegeräuschen mittels einer selbstadaptierenden Regelung und/oder Ansteuerung anzupassen.

12. Maschinenlesbares Speichermedium, auf dem das Computerprogramm nach Anspruch 11 gespeichert ist.
